(19) Europäisches Patentamt
European Patent Office
Office européen des brevets

(11) **EP 4 273 574 A1**

(12) **EUROPEAN PATENT APPLICATION**

(43) Date of publication:
**08.11.2023 Bulletin 2023/45**

(21) Application number: **22171894.3**

(22) Date of filing: **05.05.2022**

(51) International Patent Classification (IPC):
**G01S 7/00** *(2006.01)*    **G01S 7/02** *(2006.01)*
**G01S 13/06** *(2006.01)*    **H04L 5/00** *(2006.01)*
**H04W 72/08** *(2009.01)*

(52) Cooperative Patent Classification (CPC):
**G01S 7/006; G01S 7/0232; G01S 7/0234;**
**G01S 7/0235; G01S 13/06**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Nokia Technologies Oy**
**02610 Espoo (FI)**

(72) Inventors:
- **Knudsen, Knud**
  **9440 Aabybro (DK)**
- **Caporal del Barrio, Samantha**
  **9000 Aalborg (DK)**
- **Olesen, Poul**
  **9220 Aalborg Øst (DK)**
- **Blücher Brink, Stig**
  **9220 Aalborg Øst (DK)**

(74) Representative: **Swindell & Pearson Limited**
**48 Friar Gate**
**Derby DE1 1GY (GB)**

(54) **MANAGEMENT OF RADAR MEASUREMENTS**

(57) Examples of the disclosure relate to management of radar measurements. In examples of the disclosure an apparatus can comprise means for obtaining interference information for a plurality of radar resource sets wherein the radar resource sets are for radar measurement during a measurement interval allocated by a network. The apparatus also comprises means for selecting radar resource sets to use for radar measurements based on the interference information and using the selected radar resource sets for radar measurement.

FIG. 3

**Description**

TECHNOLOGICAL FIELD

Examples of the disclosure relate to management of radar measurements. Some relate to management of radar measurements for User Equipments (UEs) communicating in NR networks.

BACKGROUND

A UE transmitting wireless signals is required to comply with relevant safety guidelines so as to limit the amount of Radio Frequency (RF) electromagnetic fields to which people are exposed. These safety guidelines require that the transmit power of a UE cannot exceed a certain level and also limit the Equivalent Isotopically Radiated Power (EIRP).

If it is not known whether or not a human body is close to a UE then the UE has to reduce the Transmission (TX) power to below maximum power if directional antennas are being used. This is to ensure that a UE is not radiating too much power towards a human body.

Reliable body detection mechanisms can therefore enable determination of whether or not a body is close to the UE and can allow maximum power to be used when appropriate.

BRIEF SUMMARY

According to various, but not necessarily all, examples of the disclosure there is provided an apparatus comprising means for:

  obtaining interference information for a plurality of radar resource sets wherein the radar resource sets are for radar measurement during a measurement interval allocated by a network;
  selecting radar resource sets to use for radar measurements based on the interference information; and
  using the selected radar resource sets for radar measurement.

The interference information may be obtained from noise measurements made in an allocated measurement interval.

The apparatus may comprise means for grouping radar resource elements into the plurality of radar resource sets.

The apparatus may comprise means for receiving an indication of a grouping of radar resource elements into the plurality of radar resource sets.

The grouped radar resource elements within a radar resource set may be evenly distributed across available bandwidth for the allocated measurement interval.

The radar resource elements may be grouped within radar resource set across subcarriers in the same slot or across subcarriers different slots.

The apparatus may comprise means for determining if sufficient resources have been selected for radar measurements and requesting an updated measurement interval from the network if sufficient resources are not selected wherein the updated measurement interval comprises one or more of; a new periodicity for the measurement interval, a new length for the measurement interval, a new measurement interval.

The radar resource sets may comprise a plurality of resource elements.

The apparatus may comprise means for allocating the selected radar resource sets to different panels of a user equipment.

The apparatus may comprise means for generating unique radar signals for simultaneous radar transmissions.

The unique radar signals may be randomly selected for respective measurement intervals.

The apparatus may comprise means for using the same selected radar resource sets for subsequent radar measurements.

The apparatus may comprise a UE.

According to various, but not necessarily all, examples of the disclosure there may be provided a method comprising:

  obtaining interference information for a plurality of radar resource sets wherein the radar resource sets are for radar measurement during a measurement interval allocated by a network;
  selecting radar resource sets to use for radar measurements based on the interference information; and
  using the selected radar resource sets for radar measurement.

According to various, but not necessarily all, examples of the disclosure there may be provided a computer program comprising computer program instructions that, when executed by processing circuitry, cause:

  obtaining interference information for a plurality of radar resource sets wherein the radar resource sets are for radar measurement during a measurement interval allocated by a network;
  selecting radar resource sets to use for radar measurements based on the interference information; and
  using the selected radar resource sets for radar measurement.

BRIEF DESCRIPTION

Some examples will now be described with reference to the accompanying drawings in which:

  FIG. 1 shows an example network;
  FIG. 2 shows an example radar measurement;

FIG. 3 shows an example method;
FIG. 4 shows another example method;
FIG. 5 shows an example use case scenario
FIG. 6 shows example resource elements;
FIG. 7 shows an example signaling chart;
FIG. 8 shows an example UL gap; and
FIG. 9 shows an example controller.

DEFINITIONS

| CAZAC | Constant Amplitude Zero Auto Correlation |
| CSI | Channel State Information |
| DL | Downlink |
| DMRS | Demodulation Reference Signal |
| EIRP | Equivalent Isotopically Radiated Power |
| MPE | Maximum Permissible Exposure |
| OFDM | Orthogonal Frequency-Division Multiplexing |
| PSS | Primary Synchronization Signal |
| RE | Resource Element |
| RF | Radio Frequency |
| RSRP | Reference Signal Received Power |
| RX | Reception |
| SINR | Signal to Interference plus Noise Ratio |
| SSS | Secondary Synchronization Signal |
| TX | Transmission |
| UE | User Equipment |
| UGI | Uplink Gap Length |
| UL | Uplink |
| ZC | Zadoff-Chu |
| ZP | Zero Power |

DETAILED DESCRIPTION

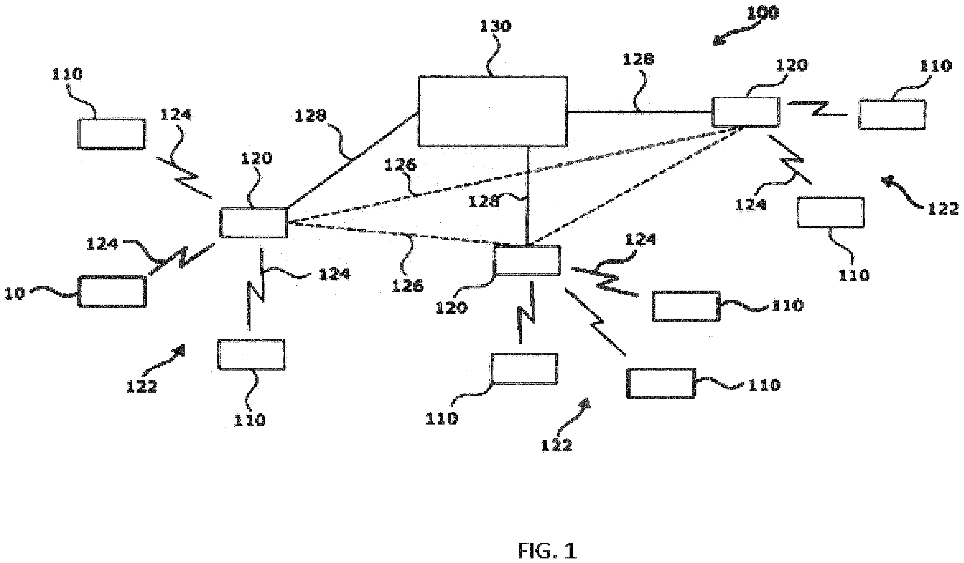

Fig. 1 illustrates an example of a network 100 comprising a plurality of network nodes including terminal nodes 110, access nodes 120 and one or more core nodes 130. The terminal nodes 110 and access nodes 120 communicate with each other. The one or more core nodes 130 communicate with the access nodes 120.

The one or more core nodes 130 can, in some examples, communicate with each other. The one or more access nodes 120 can, in some examples, communicate with each other.

The network 100 can be a cellular network comprising a plurality of cells 122 each served by an access node 120. In this example, the interface between the terminal nodes 110 and an access node 120 defining a cell 122 is a wireless interface 124.

The access node 120 comprises a cellular radio transceiver. The terminal nodes 110 comprise a cellular radio transceiver.

In the example illustrated the cellular network 100 is a third generation Partnership Project (3GPP) network in which the terminal nodes 110 are user equipment (UE) and the access nodes 120 are base stations.

In the particular example illustrated the network 100 is a Universal Terrestrial Radio Access network (UTRAN). The UTRAN consists of UTRAN NodeBs 120, providing the UTRA user plane and control plane (RRC) protocol terminations towards the UE 110. The NodeBs 120 are interconnected with each other and are also connected by means of the interface 128 to the Mobility Management Entity (MME) 130.

The term 'user equipment' is used to designate mobile equipment comprising a smart card for authentication/encryption etc such as a subscriber identity module (SIM). In other examples the term 'user equipment' is used to designate mobile equipment comprising circuitry embedded as part of the user equipment for authentication/ encryption such as software SIM.

The NodeB can be any suitable base station. A base station is an access node 120. It can be a network element in radio access network responsible for radio transmission and reception in one or more cells to or from the user equipment.

The UTRAN can be a 4G or 5G network, for example. It can for example be a New Radio (NR) network that uses gNB or eNB as access nodes 120. New radio is the 3GPP name for 5G technology.

Such networks 100 can also comprise next generation mobile and communication network, for example, a 6G network.

In such networks 100 there are regulatory requirements that limit the amount of RF electromagnetic radiation to which humans near the UE 110 can be exposed. This may limit the TX power used by UEs 110 using directional antennas.

The limitations on the amount of RF electromagnetic radiation to which a human can be exposed may be a regulatory requirement with zero tolerance. That is, the limit cannot be exceeded. Therefore, if it cannot be determined whether or not a human body is close to the UE 110 it has to be assumed that there is human body close to the UE 110 and the TX power has to be reduced. The power can only be increased when it is determined that there is not a human body 110 close to the UE 110.

A reliable method of determining if a human body is close to the UE 110 would therefore prevent the TX power from being reduced unnecessarily. In some networks 100 a UE 110 can use radar measurements to determine whether or not a human body is close to the UE 110.

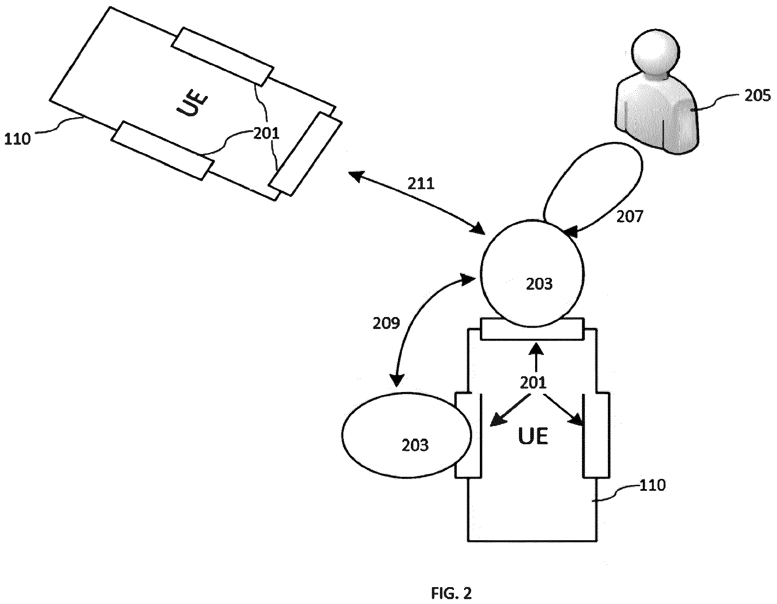

Fig. 2 shows an example scenario in which radar measurements are used to determine whether or not a human body 205 is close to a UE 110.

In the example of Fig. 2 a UE 110 is shown. The UE 110 comprises a plurality of panels 201. The panels 201 are located on different sides of the UE 110 and enable directional transmission by the UE 110. In the example of Fig. 2 the UE 110 comprises three panels 201. The UE 110 can comprise any suitable number of panels 201 in other examples.

The respective panels 201 can comprise a plurality of different antennas or antenna elements. The antennas can be arranged in an antenna array. The antenna array can allow for beamforming and directional transmission from the respective panels 201.

The respective panels 201 can be configured to transmit radar beams 203 for detecting whether or not a human body 205 is in proximity to the UE 110. The radar beams 203 can be configured to be reflected by an object close to the UE 110 as indicated by arrow 207 in Fig. 2. By detecting which beams are reflected back to the UE 110 it can be determined if there is an object close to the UE 110, in the direction in which the object is located and whether or not the object is a human body 205.

In order to enable radar measurements to be made accurately it is useful to reduce interference that might affect the radar beams 203.

The interference that might affect the radar beams can comprise coupling of the radar beams 203 transmitted by the UE 110 itself as shown by arrow 209 in Fig. 2. This causes intra-UE interference. The interference that might affect the radar beams can also comprise coupling of radar beams 203 transmitted by other nearby UEs 110 as shown by arrow 211 in Fig. 2.

Examples of the disclosure can mitigate the effects of such interference and enable accurate measurements as to the locations of human bodies 205 to be made using the radar beams 203.

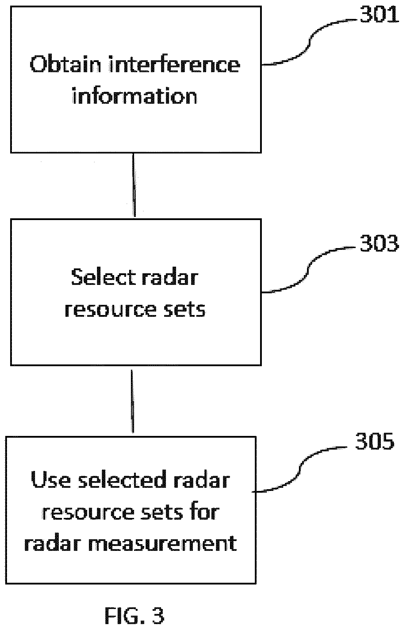

Fig. 3 shows an example method according to examples of the disclosure. The method could be implemented by UE 110, a controller of a UE 110 or by any other suitable apparatus.

At block 303 the method comprises obtaining interference information for a plurality of radar resource sets. The radar resource sets are for radar measurement during a measurement interval allocated by a network 100.

Any suitable part of the network 100 can allocate the measurement interval. In some examples the measurement interval can be allocated by a gNB 120 or by any other suitable network device or combination of network devices.

The measurement interval can be any interval in communications between the UE 110 and the network 110 that can be used for making the radar measurements. The measurement intervals can comprise an uplink (UL) gap, a downlink (DL) gap, measurement windows, unscheduled slots or any other suitable gaps.

The radar resources can comprise any resources that can be used for radar measurements. The radar resources can comprise a plurality of resource elements (REs) spread across the bandwidths, symbols and timeslots of the UE 110 and the measurement interval. The radar resource sets can comprise a group of REs selected from the available radar resources. The radar resource sets can comprise a subgroup of the available REs. The radar resource sets can comprise REs that are evenly distributed, or substantially evenly distributed, across the available bandwidth for the allocated measurement interval. In some examples the REs within a measurement interval may be consecutive in time. In some examples the REs within a measurement might not be consecutive in time.

The REs can be grouped into resource sets by the UE 110 or by the network 100. For instance, in some examples the UE 110 can be configured to group REs into a plurality of radar resource sets. In other examples a gNB 120 or other suitable network device can be configured to group REs into a plurality of radar resource sets. In such cases the UE 110 can be configured to receive an indication of the grouping of the radar resources from the network 100.

The interreference information comprise information relating to the amount of interference and/or unwanted noise for respective REs within the radar resource sets. The interference information can provide an indication of whether or not reliable radar measurements could be obtained using respected REs and resource sets.

The interference information can be obtained from any suitable source or process. In some examples the interference information can be obtained from interference measurements made in an allocated measurement interval. The interference measurements can be made before any radar measurements are made or attempted. The interference measurements can detect noise and interference for the measurement interval.

At block 303 the method comprises, selecting radar resource sets to use for radar measurements based on the interference information. The interference information can be used so that only radar resource sets with interference levels below an appropriate threshold can be selected. Any resource sets with an interference level above the threshold are not selected.

In order to enable reliable radar measurements to be made a sufficient amount of radar resources are required. For instance, a plurality of radar measurements may need to be made to establish the location of an object and whether or not that object is a human body 205. In such cases the UE 110 can be configured to determine if sufficient resources have been selected for radar measurements. If sufficient resources have been selected then the method can proceed to block 305. If sufficient resources have not been selected the UE 110 can be configured to request an updated measurement interval from the network 100. Sufficient resources might not be selected if there is too much interreference in a measurement interval so that not enough of the radar resource sets have interference levels below the required levels.

At block 305 the selected radar resource sets are used for radar measurement. As the radar resources have been pre-selected to avoid resources with excessive levels of interference, the selected radar resources should enable reliable radar measurements to be made.

When the radar resource sets are used for radar measurement some of the selected resource sets can be allocated to different panels 201 of a UE 110.

In some examples a selected radar resource set can be used for more than one measurement interval. For instance, if one or more radar resource sets have been selected for a first measurement interval then the same radar resource sets could be reused for a subsequent measurement interval. The same radar resource sets can be used for subsequent measurement intervals until interference is detected. In such cases the process of selecting a radar resource set does not have to be repeated for every measurement interval.

In some examples the method can also comprise generating unique radar signals for simultaneous radar transmissions. The unique radar signals can be randomly selected for the different antennas of the UE 110. The different antennas can be within the same panels 201 or different panels 201 of a UE 110. The signals can be unique for a given panel 201 for a given measurement interval.

The unique radar signals can then be randomly selected for respective measurement intervals. The UE 110 can try to correlate a reflected radar signal with the transmitted radar signal. If the UE 110 determines that there is a good correlation the UE 110 can be confident that the reflected radar signal is a reflection of its own transmitted radar signal because it can be assumed that other surrounding UEs 110 are using different radar signals which have a low cross correlation.

The random selection of the radar signal from a large set of available radar signals, makes it unlikely that two UEs 110 have selected the same radar signal. Further, by making a new random selection of a radar signal for each measurement interval, it is unlikely that an interfering UE 110 would select the same set of radar signals for different measurement intervals.

It is a possible, although rare occurrence, that a nearby UE could use the same radar signals on the same resource sets as the UE 110. In such occurrences the UE 110 could make a false body detection because it would detect the radar signal from the nearby UE 110 as its own reflected radar signal. The consequence is that the UE 110 will lower its output power until the random selected radar signals selected by the two UEs 110 differs. This would probably be in the next measurement interval because it is very unlikely that the two UEs 110 would select the same radar signals as each other again.

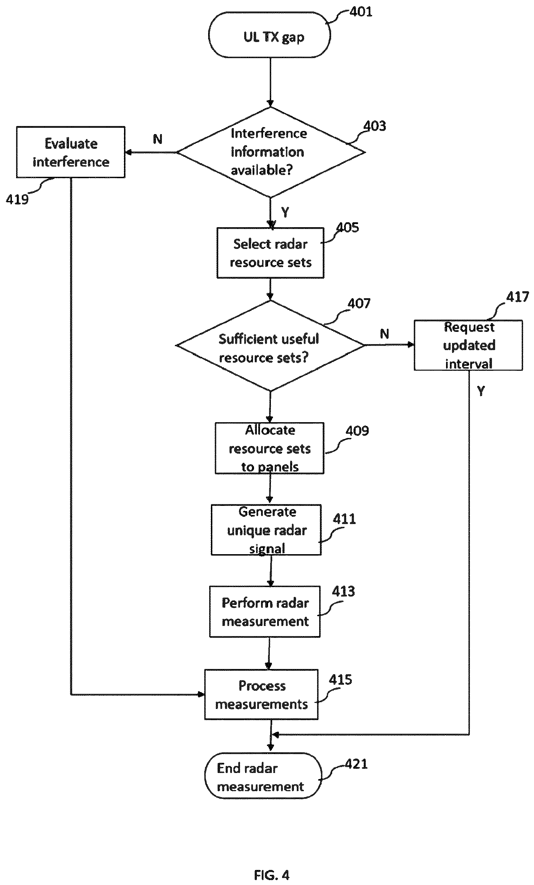

Fig. 4 shows another example method according to examples of the disclosure. The method could be implemented by UE 110, a controller of a UE 110 or by any other suitable apparatus.

At block 401 the UE receives an indication of the measurement interval that can be used for the radar measurements. The measurement interval can be allocated by the network 100. The measurement interval can be allocated by any suitable network device such as gNB 120.

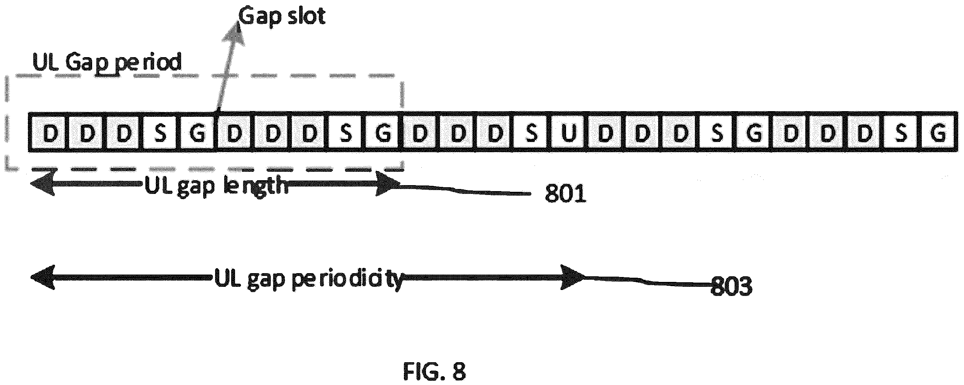

In the example of Fig. 4 the measurement interval comprises a UL TX gap. An example UL TX gap is shown in Fig. 8. Other types of measurement interval could be used in other examples of the disclosure.

At block 403 the UE 110 determines whether or not interference information is available. The interference information can relate to interference and/or unwanted noise for the radar resource sets for the allocated measurement interval.

The UE 110 can determine whether or not the available interference information is up to date. For instance, the UE 110 can determine if the interference information relates to the previous measurement interval. The measurements performed to obtain the interference information can be performed as part of a radar measurement or as part of measurements without any simultaneous radar measurements.

If at block 403 it is determined that interference information is available then the method proceeds to block 405. Conversely, if at block 403 it is determined that interference information is not available then the method proceeds to block 419.

At block 405 the UE 110 selects radar resource sets for use for performing radar measurements.

The respective radar resource sets can comprise one or more REs. In some examples the radar resource sets can be constructed by the network 100. For example, a gNB 120 or other suitable network device can construct the radar resource sets by assigning available REs to respective radar resource sets. The network 100 can then provide information indicative of the radar resource sets to the UEs 110.

In some examples the radar resource sets can be constructed by the UE 110 itself. In such examples a UE 110 could construct the radar resource sets by randomly, or pseudo randomly, assigning REs to respective radar resource sets. The allocation of the REs to the respective radar resource sets can ensure that there is no coordination between the radar resource sets used by different UEs 110. Therefore, when a UE 110 selects a radar resource set for its radar measurement, it may happen that some REs in the selected radar resource sets are in use by other UEs 110, while the remainder of the REs in the selected radar resource sets are not. Such a radar resource sets could still be used for radar measurements provided that selection criteria, such as those given below, are satisfied.

The interference information is used by the UE 110 when selecting the radar resource sets for use for radar measurements. There may be one or more selection criteria relating to the interference information that the UE 110 must apply when selecting the radar resource sets for use. Example selection criteria comprise:

1. Average Reference Signal Received Power (RSRP) of the REs in a radar resource set must be below an absolute threshold. This requirement is set to reduce the likelihood of selecting a radar resource set that is already being used by a nearby UE 110

2. Average RSRP of the REs in radar resource set must be at least $k$ dB below the minimum RSRP level of the reflected signal. If $k$ is appropriately selected, this requirement will ensure that the Signal to Interference plus Noise Ratio (SINR) of the signal inside the bandwidth of the radar resource set is sufficient to perform the radar measurement with sufficient quality. The value of $k$ will be specific to the UE 110. The value of $k$ can depend on the concept used for the radar measurements, the distance at which reliable radar measurements are needed and/or any other suitable factor.

3. In cases where in-band radar measurements are to be used, the UE 110 can also compare the average RSRP level of the radar resource sets with the level in the Zero Power (ZP) Channel State Information (CSI) resources as defined in 3GPP TS 38.211 V16.6.0 section 7.4.1.5 or as defined by any other suitable requirements. If the RSRP level of the radar resource set is significantly higher (for example, 5dB) than the RSRP level of ZP CSI, then the radar resource set can be assumed to be occupied.

In some examples of the disclosure the UE 110 can be configured to use the same selected radar resource sets for subsequent measurement intervals, until interference is detected. The UE 110 shall only replace the previously used radar resource sets if needed. For example, the previously used radar resource sets will be replaced if the previously used radar resource sets do not satisfy the appropriate selection criteria but otherwise the previously used radar resource sets can be reused. The re-use of the previously used radar resource sets can enable UE 110 to perform the selection of radar resource sets when needed because interference measurements made in the previous measurement interval will enable a prediction of which radar resource sets are likely to be occupied in the next measurement interval.

The UE 110 can select any number of radar resource sets. In some examples the UE 110 can select a plurality of radar resource sets. The number of radar resource sets that are selected can be limited by the maxima usage of the measurement interval and/or any other factors.

In some examples the radar resource sets that are to be used can be selected by ranking available radar resource sets according to their RSRP and selecting the one or more radar resource sets with the lowest RSRP. Other processes and criteria for selecting the radar resource sets could be used in other examples.

At block 407 the UE 110 determines whether or not sufficient useful radar resource sets for radar measurement have been selected.

In order to make a useful assessment of whether or not a human body 205 is close to the UE 110 a plurality of radar measurements may be needed. At block 407 it can be determined whether or not the radar resource sets that are available for use are sufficient for such measurements.

The decision as to whether or not sufficient radar resource sets have been selected can be determined using any suitable process. In some examples the decision can be made by evaluating if the measurement interval comprises enough useful radar resource sets that satisfy appropriate selection criteria for the UE 110 to perform its radar measurements.

If at block 407 it is determined that sufficient radar resource sets for radar measurement have been selected then the method proceeds to block 409. Conversely, if at block 407 it is determined that sufficient radar resource sets for radar measurement have not been selected then the method proceeds to block 417. Sufficient radar resource sets might not be available if the measurement interval is too occupied and/or noisy.

At block 409, if the UE 110 comprises a plurality of panels 201, the selected radar resource sets can be allocated to the panels 201 of the UE 110. In some examples different radar resource sets can be allocated to different panels 201 of the UE 110.

In some examples the radar resource sets can be allocated equally, or substantially equally, across the different panels 201. In some examples the radar resource sets can be allocated so that one or more panels 201 are favored compared to the other panels 201. For example, active panels could be allocated more radar resource sets than inactive panels 201.

If the UE 110 comprises a plurality of panels 201 and can support concurrent reception (RX) and TX on those panels 201 this can enable the UE 110 to perform simultaneous radar measurements using the different panels 201. For example, the UE 110 could support dual connectivity of UL MIMO or any other suitable connectivity. However, as shown in Fig. 2 the respective panels 201 will not be ideally isolated from each other. This can cause coupling between the panels 201 and a given panel could also detect reflections from the TX signal transmitted by the other panels 201 within the device 101. However different REs are orthogonal to each other which means that a UE 110 can transmit orthogonal radar signals by selecting different resource sets for the radar measurements for the respective panels 201.

Performing simultaneous radar measurements on a plurality of panels 201 enables the UE 110 to do radar measurements with fewer measurement intervals. This can allow for higher data throughput.

At block 411 the UE 110 can generate a unique radar signal. The radar signals are unique for the different antenna elements within a panel 201. The radar signals are unique for a given panel and a given measurement interval.

The generation of the unique radar signals can enable the UE 110 to distinguish its own radar signals from radar signals transmitted by other UEs 110.

The respective unique radar signals can have low cross correlation. Any suitable process can be used to generate the radar signals having a low cross correlation. In some examples the low cross correlation can be achieved by achieved by generating the radar signals from randomly selected m-sequences (which are also used for Primary Synchronization Signal (PSS) and Secondary Synchronization Signal (SSS) signals, by selecting different Zadoff-Chu (ZC) sequences with a random time shift or by any other suitable process.

Sequences such as ZC sequences provide the benefit that they generate a Constant Amplitude Zero Auto Correlation (CAZAC) waveform. The zero autocorrelation means that the different UEs 110 can achieve zero cross correlation with ZC sequences transmitted by other UEs 110 by transmitting time shifted versions of the ZC sequence. Other types of sequences could be used in other examples.

In some examples the UE 110 can use different unique signals for different measurement intervals. In such cases the UE 110 would generate different radar signals having a low cross correlation for different measurement intervals. In some examples a random reselection, or other suitable process, can be used to generate the different unique signals for the different measurement intervals. This helps to avoid nearby UEs 110 using the same signal in different measurement intervals.

If it does happen by chance that two UEs 110 are using the same resources it will cause the UEs 110 to observe a noisier radar measurement. This would then cause the UE 110 to temporarily reduce the output power to ensure MPE compliance. However, because the different unique signals would be random there would be a very low chance of the same radar signals being used by neighbouring UEs 110 in consecutive measurement intervals. This would allow less noisy radar measurements to be made in the next measurement interval and can enable the output power to be increased again if appropriate.

At block 413 the method comprises performing the radar measurement. Any suitable process can be used to perform the radar measurement. The process can be a known process such as the Orthogonal Frequency-Division Multiplexing (OFDM) radar concept or any other suitable process.

The radar measurement can enable any objects near the UE 110 to be detected. The radar measurement can also collect interference information for the selected radar resources. The interference information can be obtained from the radar resources even if they are not used for radar signals.

At block 415 the radar measurements are processed and stored. The processing can comprise determining the RSRP values. For example, the UE 110 can calculate the RSRP for the respective used radar resource sets and the respective unused radar resource sets.

For the unused radar resource sets the RSRP can be calculated directly on the received REs. For the radar resource sets that have been used the RSRP is calculated after removing the reflected signal so that the RSRP represents only the noise/interference level. The transmitted radar signal x($f$) is known by the UE 110, so the reflected signal y($f$) can be used to estimate the radio channel H($f$) using a similar process to how this is done using the DMRS (Demodulation Reference Signal). The noise and interference n($f$) can then be calculated as:

$$n(f) = y(f) - H(f)x(f)$$

Once n($f$) is known, the average RSRP can be calculated as:

$$RSRP = \frac{\sum_{i=0}^{N_{RE}-1} n(RE_i)}{N_{RE}}$$

Where $N_{RE}$ is the number of RE in the radar resource set and n($RE_i$) is the noise/interference level for RE number $i$ in the radar resource set.

The processed measurements can be stored so that they can be used for selecting radar resource sets in the next measurement interval.

If at block 407 it is determined that sufficient radar resource sets for radar measurement have not been selected then the method proceeds to block 417. For example, sufficient radar resource sets might not be available because the measurement interval is too occupied and/or noisy.

At block 417 an updated measurement interval is requested from the network 100. For example, the UE 110 can transmit a request for an updated measurement interval to a gNB 120 or any other suitable network device.

When the gNB 120 or other network device receives a request for an updated measurement interval the gNB 120 decides if it fulfils the request or not. If the gNB 120 approves a request for an updated measurement interval then information indicative of the updated measurement interval can be transmitted to the UE 110. The UE 110 can then repeat the process shown in Fig. 4 using the updated measurement interval. If the gNB 120 does not approve a request for an updated measurement interval then the UE 110 can still continue to perform the radar measurement with the best available radar resource sets however the accuracy of these radar measurement will be degraded by the interference.

The updated measurement interval can be updated in any suitable way. In some examples the updated measurement interval can comprise a new measurement interval. The new measurement interval could have the same length and periodicity as the old measurement interval. In some examples the updated measurement interval could have a new periodicity or a new length. That is, the updated measurement interval could have a different periodicity and/or length compared to the original measurement interval.

If at block 403 it is determined that up to date interference information is not available then the method proceeds to block 419. It might be determined that up to date interference information is not available if the UE 110 has not performed interference measurements in the preceding measurement interval. For example, the UE 110 could have skipped making the radar measurements in one or more measurement intervals. Up to date measurements may be needed as the radar resource sets used by other UEs 110 could have changed.

At block 419 the interference is evaluated so as to determine interference information for the measurement interval. The measurements enable up to date interference information for the measurement interval to be obtained.

The obtained measurement intervals can then be stored at block 415 and used for selection of radar resource sets for the next measurement interval.

At block 421 the radar measurements are completed.

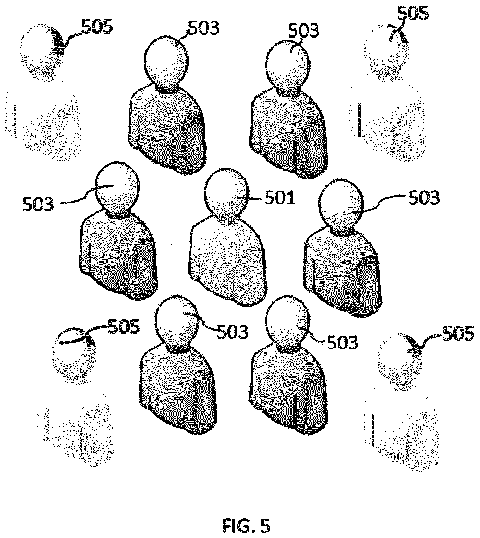

Fig. 5 shows an example use case scenario for examples of the disclosure. Fig. 5 shows a plurality of different users 501, 503, 505. Each of the users 501, 503, 505 could be associated with a UE 110. The UEs 110 are not shown in Fig. 5. In the scenario shown in Fig. 5 the network 100 does not have precise location information for the UEs 110. The UEs 110 could be using different operators (there would be no coordination between operators), but still perform radar measurements on the same resources (using out of band measurements) and even if the UEs 110 are doing in-band measurements the network 100 will not have such precise position information that it can schedule the orthogonal resources between the UEs 110.

In such situations it is not possible for the network 100 to assign resources for radar measurements and instead the UEs 110 can use methods as shown in Figs. 3 and 4.

When the methods of Figs. 3 and 4 are used by a UE 110 interference can be caused by neighboring UEs. In the example of Fig. 5 a first user 501 is shown surrounded by six neighboring user's 503. Four distant users 505 are also shown. It is to be appreciated that there could be any suitable number of neighboring users 503 and distant users 505 in other use scenarios and that they could be positioned in any positions.

In the example of Fig. 5 the neighboring users 503 are close to the first user 501. There are no intervening users positioned between the neighboring users 503 and the first user 501. The neighboring users 503 are also positioned close to the first user 501. The neighboring users 503 could be positioned with 1 meter or closer to the first user 501. Signals from the UEs 110 associated with the neighboring users 503 could cause interference at the UE 110 associated with the first user 110.

In the example of Fig. 5 the distant users 505 are further away from the first user 501 than the neighboring users 503. In the example of Fig. 5 one or more neighboring users 503 are positioned between the distant users 505 and the first user 501. This can block signals from the UEs 110 associated with the distant users 505 and reduce interference at the UE 110 associated with the first user 501.

The distant users 505 are positioned further away from the first user 501 compared to the neighboring users 503. The distant users 505 could be positioned more than 1 meter away from the first user 501. The distance between the first user 501 and the distant users 505 can reduce interference between the UEs 110 associated with the first user 501 and the distant users 505.

Signals from the UEs 110 associated with the neighboring users 503 could cause interference at the UE 110 associated with the first user 110.

In examples of the disclosure the use of the unique radar signals can help to reduce interference between the UEs 110 from the first user 501 and the neighboring users 503. For example, if ZC sequences are used in the scenario shown in Fig. 5 to generate the radar signals this gives up to 1151 sequences (3GPP 38.211, section 6.3.3) to choose from for each measurement interval. The likelihood that the UE 110 of the first user 501 has selected the same sequence as the UE 110 of one or more of the UEs 110 of the neighboring users 503 is: 6 / 1151 = 0.52%

Therefore, in the rare case that two or more UEs 110 have selected the same radar resource sets, the wanted UE 110 can still assume that a received signal is the reflection of its own signal by 99.5% certainty by verifying the sequence. If the check is repeated for consecutive measurement intervals this will rapidly increase the confidence. After two measurement intervals gaps the likelihood that two UEs 110 have selected the same two ZC sequences is very close to zero: (6 / (1151*1151)) = 4.5e-4%

There are defined ZC sequence lengths of 139, 571, 839 and 1151 in 3GPP 38.211, section 6.3.3. The UE 110 shall preferably choose radar resource sets matching one of the sequence lengths or a combination of those.

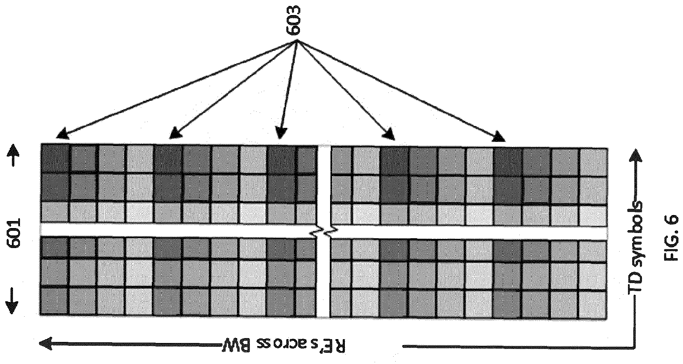

Fig. 6 shows an example construction of a radar resource set from a plurality of resource elements.

In the example of Fig. 6 the radar resource set could be constructed by a gNB 120 or other network device. Information indicative of the radar resource set could then be transmitted to the UE 110.

Fig. 6 conceptually shows a plurality of OFDM symbols in a measurement interval 601. Six symbols are shown in Fig. 6 for illustrative purposes. Other numbers of symbols could be used in other examples.

To construct the radar resource set the respective OFDM symbols within the measurement interval 601 are split into *n* radar resource sets with an equal number of REs in each set. The REs with the respective radar resource sets can be distributed evenly, or substantially evenly, across the available bandwidth. The distribution across the bandwidth ensures that radar measurements made using the different radar resource sets have similar or equal performances assuming similar or equal interference levels.

For instance, in the example of Fig. 6 every $n^{th}$ RE is allocated to the same radar resource set. This is indicated by the different shading used for the different Res. In the example of Fig. 6 four radar resource sets are constructed and so every fourth RE within a symbol is allocated to the same radar resource set. For instance, the dark shaded REs 603 as shown in Fig. 6 would be allocated to the same radar resource set.

Therefore, if m indicates the available OFDM symbols, then the total number of radar resource sets will be $n$ times $m$. The network 100 will have to provide information about $n$ and $m$ to the UE 110. This information can be included in the measurement interval configuration message, which can include further information about the position and duration of the measurement interval.

If "out of band" radar measurements are to be performed and the network 100 is to construct the radar resource sets then the network 100 also needs to provide the UE 110 with information indicating:

- The frequency band to use and numerology, e.g. $\mu$ = 0, 1, 2, 3 or 4
- Start sub carrier (or frequency offset). The bandwidth is given by $n$, which is described above.

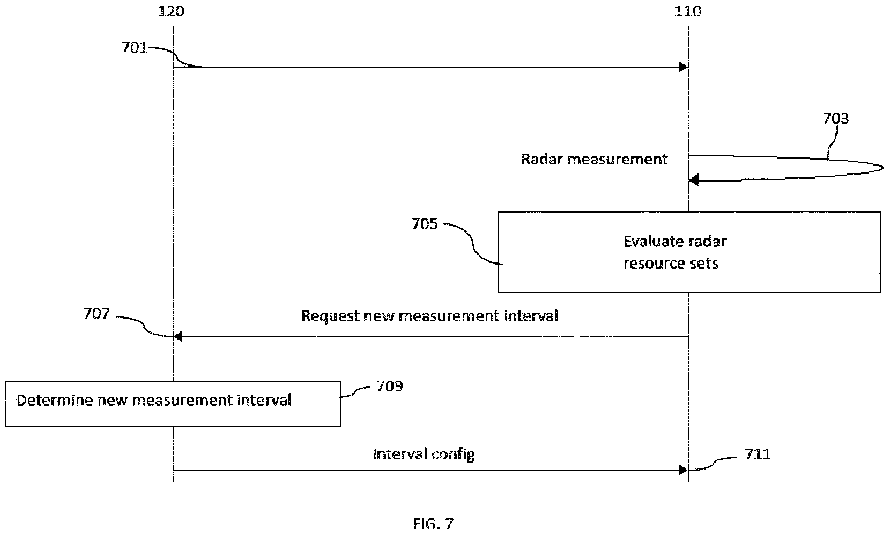

Fig. 7 shows an example signaling chart that can be used when a UE 110 determines that a different measurement interval is needed. The signaling chart shows a method that can be implemented by a system comprising a UE 110 and an access node 120 such as a gNB. The UE 110 and the gNB 120 can be within a network 100 such as the network 100 of Fig. 1 or any other suitable type of network.

At block 701 the gNB 120 sends a measurement interval configuration message to the UE 110. The measurement interval configuration message can comprise any suitable information that enables the UE 110 to make use of the allocated measurement interval. The configuration message can comprise information such as scheduling information, maximum power, maximum usage, radar resource set information and/or any other suitable information.

At block 703 the UE 110 performs radar measurements. The UE 110 performs the radar measurements in the measurement interval. The UE 110 can measure interference during the measurement interval.

At block 705 the UE 110 determines whether or not sufficient useful radar resource sets are available. For example, the UE 110 can use the measurements made at block 703 to evaluate if the measurement interval comprises enough useful radar resource sets that satisfy appropriate selection criteria for the UE 110 to perform its radar measurements. Any suitable process can be used to make this evaluation. For instance the RSRP of radar resources sets could be compared to the RSRP of the ZP CSI.

Sufficient radar resource sets might not be available if the measurement interval is too occupied and/or noisy. If it is determined that sufficient radar resource sets are not available then, at block 707 the UE 110 sends a message to the gNB 120 indicating that the measurement interval is too busy and requesting a new measurement interval.

At block 709, in response to receiving the request for the new measurement interval, the gNB 120 can determine a new measurement interval. In some examples the gNB 120 can determine whether or not to allocate a new measurement interval for the UE 110 or to just leave the UE 110 with the current measurement interval.

At block 711 the gNB can send a new measurement interval configuration message to the UE 110. The new measurement interval configuration message can comprise information related to the new measurement interval.

Fig. 8 shows an example measurement interval. In this example the measurement interval is a UL measurement gap. Other types of measurement interval could be used in other examples of the disclosure.

The UL measurement gap has a gap length indicated by the arrow 801 and a gap periodicity as indicated by the arrow 803. The gap length and the UL gap periodicity can be any suitable number of slots. The gap length and the gap periodicity can be determined by the gNB 120 or by any other suitable part of the network 100.

In the example of Fig. 8 the UL measurement gap consists of consecutive static UL slot(s) within the UL measurement gap length, defined by *nrofUplinkSlots* in one or more *TDD-UL-DL-Pattern* duration, starting from the first static UL slot of an UL gap repetition period. In the example of Fig. 8 the UL measurement gap consists of all consecutive static UL slots within the UL gap length There can be DL slot and/or special slot but no static UL slot between two succeeding static UL slots within an UL measurement gap length (UGL). UGL is defined as the aggregated length of UL slots used as UL measurement gap within an UL gap repetition period.

Examples of the disclosure therefore provide an interference mitigation procedure that increases the reliability of radar measurements by increasing the SINR of the radar measurements. The use of the selection procedures for the radar resource sets described herein adapt the radar resource sets that are used to provide resource sets with appropriate SINR levels.

The more reliable radar measurements reduce ambiguity as to whether or not there is a human body 205 blocking the UE 110. This can help to prevent MPE limitations being activated unnecessarily.

Examples of the disclosure can also reduce the number of measurement intervals that are needed for multi-panel UEs 110 to perform radar measurements because the examples of the disclosure enable the measurements to be made by the different panels 201 of the UE 110 at the same time. This can increase the data throughput.

Examples of the disclosure can also reduce the activation of measurement intervals by the UE 110 because it enables simultaneous radar measurements. This reduces overhead for the radar measurements. For instance, in scenarios where there is a lot of noise or interference the UE 110 can move to a different measurement interval where the radar measurements can be performed with better SINR and so can obtain radar measurements with a higher accuracy (smaller variance). This can reduce the number of measurement intervals that are needed to perform the radar measurements compared to sequential radar measurements performed in separate measurement intervals on multi-panel UEs 110. This also reduces the number of measurement intervals needed in cases where there is high interference because the UE adaptively replaces the radar resource sets with high interference with radar resource sets that have a lower interference.

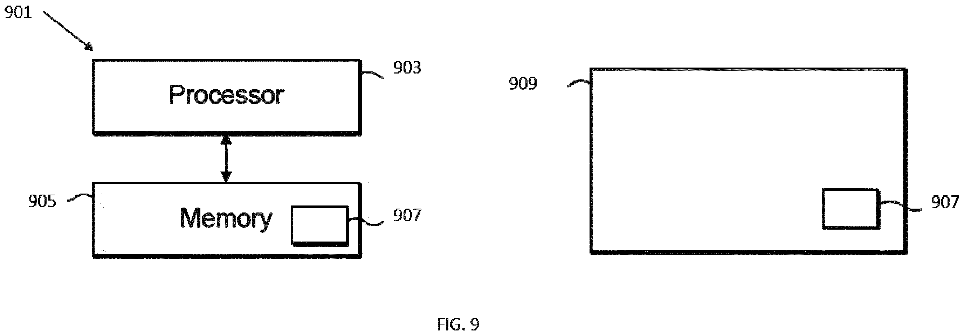

Fig. 9 illustrates an example of a controller 901. The controller 901 could be provided within an apparatus such as a UE 110 or any other suitable device. Implementation of a controller 901 can be as controller circuitry. The controller 901 can be implemented in hardware alone, have certain aspects in software including firmware alone or can be a combination of hardware and software (including firmware).

As illustrated in Fig. 9 the controller 901 can be implemented using instructions that enable hardware functionality, for example, by using executable instructions of a computer program 907 in a general-purpose or special-purpose processor 903 that may be stored on a computer readable storage medium (disk, memory etc.) to be executed by such a processor 903.

The processor 903 is configured to read from and write to the memory 905. The processor 903 may also comprise an output interface via which data and/or commands are output by the processor 903 and an input interface via which data and/or commands are input to the processor 903.

The memory 905 stores a computer program 907 comprising computer program instructions (computer program code) that controls the operation of the apparatus when loaded into the processor 903. The computer program instructions, of the computer program 907, provide the logic and routines that enables the apparatus to perform the methods illustrated in Figs. 3 to 4 The processor 903 by reading the memory 905 is able to load and execute the computer program 907.

The controller 901 therefore provides an apparatus that comprises: at least one processor 901; and at least one memory 905 including computer program code; the at least one memory 905 storing instructions that, when executed by the at least one processor 903, cause the apparatus at least to perform;

obtaining interference information for a plurality of radar resource sets wherein the radar resource sets are for radar measurement during a measurement interval allocated by a network;
selecting radar resource sets to use for radar measurements based on the interference information; and
using the selected radar resource sets for radar measurement.

The computer program 907 may arrive at the apparatus or network apparatus via any suitable delivery mechanism 909. The delivery mechanism 909 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 907. The delivery mechanism may be a signal configured to reliably transfer the computer program 907. The apparatus may propagate or transmit the computer program 907 as a computer data signal.

The computer program 907 can comprise computer program instructions for causing an apparatus to perform at least the following or for performing at least the following:

obtaining interference information for a plurality of radar resource sets wherein the radar resource sets are for radar measurement during a measurement interval allocated by a network;
selecting radar resource sets to use for radar measurements based on the interference information; and
using the selected radar resource sets for radar measurement.

The computer program instructions may be comprised in a computer program, a non-transitory computer readable medium, a computer program product, a machine readable medium. In some but not necessarily all examples, the computer program instructions may be distributed over more than one computer program.

Although the memory 905 is illustrated as a single component/circuitry it may be implemented as one or more separate components/circuitry some or all of which may be integrated/removable and/or may provide permanent/semi-permanent/ dynamic/cached storage.

Although the processor 903 is illustrated as a single component/circuitry it may be implemented as one or more separate components/circuitry some or all of which may be integrated/removable. The processor 903 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:

(a) hardware-only circuitry implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions and

(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in Figs. 4 to 5 can represent steps in a method and/or sections of code in the computer program 907. The illustration of a particular order to the blocks does not necessarily imply that there is a required or preferred order for the blocks and the order and arrangement of the block may be varied. Furthermore, it can be possible for some blocks to be omitted.

Where a structural feature has been described, it may be replaced by means for performing one or more of the functions of the structural feature whether that function or those functions are explicitly or implicitly described.

In some but not necessarily all examples, the UE 110, and the network 100 are configured to communicate data with or without local storage of the data in a memory at the UE 110, or the access nodes 120 and with or without local processing of the data by circuitry or processors at the UE 110, or the access nodes 120.

The data may be stored in processed or unprocessed format remotely at one or more devices. The data may be stored in the Cloud.

The data may be processed remotely at one or more devices. The data may be partially processed locally and partially processed remotely at one or more devices.

The data may be communicated to the remote devices wirelessly via short range radio communications such as Wi-Fi or Bluetooth, for example, or over long range cellular radio links. The apparatus may comprise a communications interface such as, for example, a radio transceiver for communication of data.

The UE 110 and/or the network 100 can be part of the Internet of Things forming part of a larger, distributed network.

The processing of the data, whether local or remote, can be for the purpose of health monitoring, data aggregation, patient monitoring, vital signs monitoring or other purposes.

The processing of the data, whether local or remote, may involve artificial intelligence or machine learning algorithms. The data may, for example, be used as learning input to train a machine learning network or may be used as a query input to a machine learning network, which provides a response. The machine learning network may for example use linear regression, logistic regression, vector support machines or an acyclic machine learning network such as a single or multi hidden layer neural network.

The processing of the data, whether local or remote, may produce an output. The output may be communicated to the UE 110, and the access nodes 120 where it may produce an output sensible to the subject such as an audio output, visual output or haptic output.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

**Claims**

1. An apparatus comprising means for:

   obtaining interference information for a plurality of radar resource sets wherein the radar resource sets are for radar measurement during a measurement interval allocated by a network;
   selecting radar resource sets to use for radar measurements based on the interference information; and
   using the selected radar resource sets for radar measurement.

2. An apparatus as claimed in claim 1 wherein the interference information is obtained from noise measurements made in an allocated measurement interval.

3. An apparatus as claimed in any preceding claim wherein the apparatus comprises means for grouping radar resource elements into the plurality of radar resource sets.

4. An apparatus as claimed in any of claims 1 to 2 wherein the apparatus comprises means for receiving an indication of a grouping of radar resource elements into the plurality of radar resource sets.

5. An apparatus as claimed in any of claims 3 to 4 wherein the grouped radar resource elements within a radar resource set are evenly distributed across available bandwidth for the allocated measurement interval.

6. An apparatus as claimed in claim 5 wherein the radar resource elements are grouped within radar resource set across subcarriers in the same slot or across subcarriers different slots.

7. An apparatus as claimed in any preceding claim wherein the apparatus comprises means for determining if sufficient resources have been selected for radar measurements and requesting an updated measurement interval from the network if sufficient resources are not selected wherein the updated measurement interval comprises one or more of; a new periodicity for the measurement interval, a new length for the measurement interval, a new measurement interval.

8. An apparatus as claimed in any preceding claim wherein the radar resource sets comprise a plurality of resource elements.

9. An apparatus as claimed in any preceding claim wherein the means are for allocating the selected radar resource sets to different panels of a user equipment.

10. An apparatus as claimed in claim 9 wherein the means are for generating unique radar signals for simultaneous radar transmissions.

11. An apparatus as claimed in claim 10 wherein the unique radar signals are randomly selected for respective measurement intervals.

12. An apparatus as claimed in any preceding claim wherein the means are for using the same selected radar resource sets for subsequent radar measurements.

13. An apparatus as claimed in any preceding claim wherein the apparatus comprises a UE.

14. A method comprising:

obtaining interference information for a plurality of radar resource sets wherein the radar resource sets are for radar measurement during a measurement interval allocated by a network; selecting radar resource sets to use for radar measurements based on the interference information; and using the selected radar resource sets for radar measurement.

15. A computer program comprising computer program instructions that, when executed by processing circuitry, cause:

obtaining interference information for a plurality of radar resource sets wherein the radar resource sets are for radar measurement during a measurement interval allocated by a network; selecting radar resource sets to use for radar measurements based on the interference information; and using the selected radar resource sets for radar measurement.

FIG. 1

EP 4 273 574 A1

FIG. 2

FIG. 3

FIG. 4

FIG. 5

FIG. 6

701

Radar measurement

703

705    Evaluate radar
       resource sets

707    Request new measurement interval

Determine new measurement interval    709

Interval config    711

FIG. 7

EP 4 273 574 A1

FIG. 8

FIG. 9

EP 4 273 574 A1

Europäisches
Patentamt

European
Patent Office

Office européen
des brevets

## EUROPEAN SEARCH REPORT

Application Number

EP 22 17 1894

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/012650 A1 (QUALCOMM INC [US]; MA RUIFENG [CN]; REN YUWEI [CN]; XU HUILIN [US]) 20 January 2022 (2022-01-20) <br> * figures 2, 4 * <br> * paragraphs [0054], [0064], [0067], [0091] – [0093] * <br> * paragraphs [0097], [0101] – [0104], [0113] * | 1-15 | INV.<br>G01S7/00<br>G01S7/02<br>G01S13/06<br>H04L5/00<br>H04W72/08 |
| X <br><br> A | US 2021/195435 A1 (RIMINI ROBERTO [US] ET AL) 24 June 2021 (2021-06-24) <br> * figures 4, 7-9 * <br> * paragraphs [0030], [0045], [0046], [0059] * <br> * paragraphs [0060], [0063], [0066] – [0068] * | 1-3,7-15 <br><br> 4-6 | |
| A | EP 3 943 965 A1 (VEONEER SWEDEN AB [SE]) 26 January 2022 (2022-01-26) <br> * figure 2 * <br> * paragraphs [0019], [0035] – [0039], [0059] * | 1-15 | |

TECHNICAL FIELDS SEARCHED (IPC)

G01S
H04L
H04W

The present search report has been drawn up for all claims

| Place of search | Date of completion of the search | Examiner |
|---|---|---|
| Munich | 3 November 2022 | Rodríguez González |

EPO FORM 1503 03.82 (P04C01)

**ANNEX TO THE EUROPEAN SEARCH REPORT**
**ON EUROPEAN PATENT APPLICATION NO.**

EP 22 17 1894

03-11-2022

| Patent document cited in search report | | Publication date | Patent family member(s) | | Publication date |
|---|---|---|---|---|---|
| WO 2022012650 | A1 | 20-01-2022 | WO | 2022011647 A1 | 20-01-2022 |
| | | | WO | 2022012650 A1 | 20-01-2022 |
| US 2021195435 | A1 | 24-06-2021 | CN | 114787654 A | 22-07-2022 |
| | | | EP | 4078228 A1 | 26-10-2022 |
| | | | US | 2021195435 A1 | 24-06-2021 |
| | | | WO | 2021127066 A1 | 24-06-2021 |
| EP 3943965 | A1 | 26-01-2022 | EP | 3943965 A1 | 26-01-2022 |
| | | | WO | 2022017801 A2 | 27-01-2022 |

EPO FORM P0459